# EUROPÄISCHE PATENTSCHRIFT

(11) **EP 2 050 802 B1**
(45) Veröffentlichungstag und Bekanntmachung des Hinweises auf die Patenterteilung: **12.05.2010**
(21) Anmeldenummer: 07020155.3
(22) Anmeldetag: 15.10.2007
(51) Int. Cl.: C09J 7/04, D03D 15/00

(54) **Verwendung eines Klebebandes zum Bandagieren von Kabelbündeln in Automobilen**
Use of adhesive tapes for bandaging of cable trees in automobiles
Utilisation des rubans adhésifs pour le bandage de faisceaux de câbles dans des automobiles

(43) Veröffentlichungstag der Anmeldung: 22.04.2009
(73) Patentinhaber: certoplast Vorwerk & Sohn GmbH, 42285 Wuppertal (DE)
(72) Erfinder: Hohmann, Dr. Andreas Franz, 40591 Düsseldorf (DE); Rambusch, Peter, 42115 Wuppertal (DE)
(74) Vertreter: Nunnenkamp, Jörg

(56) Entgegenhaltungen:
- EP-A- 1 127 969
- DE-A1- 2 656 043
- DE-U1- 20 205 486
- US-A- 3 400 004
- "Römpp Online" [Online] Dezember 2006 (2006-12), GEORG THIEME VERLAG , STUTTGART , XP002469568 Gefunden im Internet: URL:http://www.roempp.com/prod/index1.html > [gefunden am 2008-02-18] Stichwort: " natürliche Polymere " ID=RD-14-00541 * das ganze Dokument *

## Beschreibung

Die Erfindung betrifft die Verwendung eines Klebebandes, mit einem bandförmigen Träger aus einem Mischgewebe, und mit einer ein- und/oder beidseitig auf den Träger aufgebrachten Kleberbeschichtung zum Bandagieren von Kabelbündeln in Automobilen.

Ein Klebeband der eingangs beschriebenen Ausgestaltung und dessen Verwendung zum Bandagieren von Kabelbündeln in Automobilen wird in der DE 202 05 486 U1 beschrieben. Hier greift der Träger entsprechend den Erläuterungen auf der dortigen Seite 5 auf Kettfäden zurück, die als Mischgewebe aus z.B. Polyester/Baumwolle ausgeführt sind. Für die Schussfäden wird auf Polyester zurückgegriffen. Das hat sich grundsätzlich bewährt.

Daneben existieren anders aufgebaute Klebebänder, wie sie beispielsweise in der DE 102 23 631 A1 beschrieben werden. Hier ist eine quer zu Ablängrichtung weiterreißbare Folie als Trägermaterial vorgesehen. Ein Gewebe kommt nicht zum Einsatz.

Bei dem Klebeband entsprechend der DE 20 2005 010 889 U1 besteht der Träger aus einem verfestigten und aus Fasern gebildeten Vlies. Bei dem Vlies handelt es sich in der Regel um ein Vlies-Faden-Nähgewirk.

Der Stand der Technik hat sich grundsätzlich bewährt, ist jedoch in mehrfacher Hinsicht verbesserungsfähig. So sind Gewebeträger mechanisch besonders stabil, besitzen oft aber nicht die für den Einsatzzweck erforderliche Handeinreißbarkeit. Tatsächlich werden die fraglichen Klebebänder nämlich überwiegend eingesetzt, um Kabelbündel in Automobilen zu bandagieren. Dieser Vorgang wird meistens von Hand vorgenommen und erfordert, dass das Klebeband von Hand abgelängt bzw. eingerissen werden kann. Diese Handeinreißbarkeit wird von den meisten Geweben nicht oder nur mit erhöhtem Aufwand zur Verfügung gestellt.

Aus diesem Grund hat man für den Träger mit Alternativmaterialien gearbeitet, beispielsweise solchen auf Basis eines Vlieses. Solche Vliesträger erfordern jedoch spezielle Maßnahmen beim Kleberauftrag. Alternative Materialien, wie beispielsweise die weiterreißbare Folie nach der DE 102 23 631 A1 sind dagegen oftmals mit dem Nachteil verbunden, dass die Wiederverwertung schwierig ist und ein sortenreines Recycling nicht gelingt.

Diese Probleme werden auch von dem im Rahmen der DE 26 56 043 A1 beschriebenen Breitgewebe nicht gelöst. Dieses Breitgewebe ist in Schussrichtung leicht einreißbar und lässt sich selbstklebend oder klebend beschichten. Dabei kommen Schussfäden aus Baumwolle, Zellwolle, einem Gemisch aus Baumwolle und Zellwolle oder anderen Werkstoffen zum Einsatz. Eine Kettfadenstruktur besteht aus Kettfäden aus Baumwolle oder Zellwolle bzw. Baumwolle/Zellwolle. Außerdem kommen mit Baumwolle oder Zellwolle umsponnene Polyurethan- bzw. Gummifäden zum Einsatz.

Die EP 1 127 969 A1 beschreibt ein Textilsubstrat, bei welchem die Kette bzw. der Schuss aus Mischgam aus 30 Gew.-% bis 70 Gew.-% Wolle und 30 Gew.-% bis 70 Gew.-% Viskose umfasst.

Die schließlich noch zu berücksichtigende US 3 400 004 beschreibt ein Gewebe, bei dem Klettfäden aus Polypropylen und Schussfäden aus Baumwolle Verwendung finden.

Der Erfindung liegt das technische Problem zugrunde, ein Klebeband der eingangs beschriebenen Ausführungsform so weiterzuentwickeln und für den beschriebenen Verwendungszweck zu ertüchtigen, dass ein zugleich stabiler und dennoch handeinreißbarer Träger zur Verfügung gestellt wird, der sich problemlos mit einem Kleber beschichten lässt und zugleich besondere Vorteile bei der Entsorgung zur Verfügung stellt.

Zur Lösung dieser technischen Problemstellung ist Gegenstand der Erfindung die Verwendung eines Klebebandes, mit einem bandförmigen Träger aus einem Mischgewebe mit materialverschiedenen sowie sortenreinen Kettfäden aus reißfestem synthetischen Garn auf Basis rein künstlicher Rohstoffe und Schussfäden aus natürlichem Garn auf Basis natürlicher Rohstoffe, und mit einer ein- und/oder beidseitig auf den Träger aufgebrachten Kleberbeschichtung, wobei der Träger zu 20 Gew.-% bis 80 Gew.-% aus dem natürlichen Rohstoff hergestellt ist, zum Bandagieren von Kabelbündeln in Automobilen. Insbesondere ist der Träger zu 30 Gew.-% bis 70 Gew.-% und vorzugsweise zu 60 Gew.-% bis 70 Gew.-% aus dem natürlichen Rohstoff und dem Rest dem synthetischen Rohstoff, insbesondere Kunststoff, hergestellt.

Im Rahmen der Erfindung besteht der Träger entsprechend den zuvor angegebenen Gewichtsangaben also zumindest zum Teil aus dem natürlichen Rohstoff und im Übrigen wie gehabt aus Kunststoff bzw. Kunststoffgarnen. Im Allgemeinen kommt mehr als 50 Gew.-% des fraglichen natürlichen Rohstoffs bei der Herstellung des Trägers für die das Klebeband zum Einsatz und beträgt der Anteil des Kunststoffes dementsprechend weniger als 50 Gew.-%.

Dabei hat es sich bewährt, wenn für die Herstellung der Kettfäden und/oder der Schussfäden natürliche oder synthetische Garne eingesetzt werden. Die Kettfäden und die Schussfäden sind jeweils sortenrein ausgebildet.

D.h., es kommen Polyesterfäden respektive Polyesterfilamentfäden, Polyacrylfäden bzw. Polyacrylfilamentfäden als synthetische Fäden zum Einsatz. Daneben greift die Erfindung ausdrücklich auf beispielsweise Viskosefäden zurück, also Fäden aus dem natürlichen Rohstoff Viskose, wobei selbstverständlich auch andere natürliche Rohstoffe grundsätzlich zum Einsatz kommen können und abgedeckt werden.

Um die Handeinreißbarkeit in Querrichtung des Trägers zu gewährleisten und das fragliche Klebeband insbesondere zum Umwickeln respektive Bandagieren von Kabelbündeln vorzugsweise in Automobilien zu ertüchtigen, hat es sich jedoch bewährt, wenn die Kettfäden aus reißfestem synthetischen Garn und die Schussfäden aus natürlichem Garn hergestellt sind. Es kommen sortenreine Fäden zum Einsatz, also entweder Kunststofffäden oder Viskosefäden.

Die gesamten Fäden (Kunststofffäden und Viskosefäden) werden nun zur Herstellung des Gewebes eingesetzt, und zwar grundsätzlich sowohl in der Kette als auch im Schuss.

Für den beschriebenen Verwendungszweck empfiehlt es sich, die Kettfäden aus dem reißfesten synthetischen Garn herzustellen und die Schussfäden demgegenüber aus einem natürlichen Garn. Auf diese Weise greift die Erfindung in der Kette regelmäßig auf reißfeste Fäden auf Basis rein künstlicher Rohstoffe zurück. Außerdem wird ein Klebeband zur Verfügung gestellt, welches in der Hauptverarbeitungsrichtung, der Längsrichtung oder Kettrichtung, ähnliche Eigenschaften wie ein solches mit einem Träger aus reißfesten synthetischen Fäden aufweist. Hierfür zeichnen im Wesentlichen die reißfesten synthetischen Fäden in Längsrichtung des Trägers bzw. die Kettfäden verantwortlich.

Dennoch und zugleich wird die erforderliche Handeinreißbarkeit (in Querrichtung des Trägers) gewährleistet. Das wird im Kern durch das Zusammenspiel der Kettfäden aus dem reißfesten synthetischen Garn und der Schussfäden aus dem natürlichen Garn bewerkstelligt. Denn die Reißfestigkeit in Kettrichtung und Hauptverarbeitungsrichtung beim Bandagieren von Kabelbündeln impliziert eine geringe Längsdehnung des Trägers und folglich des Klebebandes im Ganzen. Durch diese relative Dimensionsstabilität gelingt es, die an sich reißfesten Kettfäden aus dem synthetischen Garn per Hand in Schussrichtung durchtrennen zu können, also die Handeinreißbarkeit des Klebebandes in Querrichtung zu gewährleisten.

Dagegen kommt es auf eine Difflensionsstabilität in Querrichtung des Trägers respektive Kleberbandes praktisch nicht an, weil das Klebeband bei seiner Verarbeitung in dieser Richtung nicht oder kaum gedehnt wird. Folgerichtig können an dieser Stelle hauptsächlich die Schussfäden aus natürlichem Garn eingesetzt werden. Dadurch lässt sich das Klebeband im Ganzen besonders einfach wiederverwerten respektive entsorgen.

Denn die Schussfäden aus beispielsweise natürlichen bzw. naturnahen Fasern schonen die endlichen natürlichen Ressourcen, die hauptsächlich auf Kohle und Petrolchemie basieren. Außerdem können die Schussfäden aus nachwachsenden Quellen gewonnen werden, beispielsweise aus Holz. Hinzu kommt, dass die Schussfäden aus den natürlichen Garnen die Wiederverwertung des erfindungsgemäßen Klebebandes erleichtern oder doch zumindest begünstigen, weil die fraglichen Fasern und folglich die Schussfäden praktisch rückstandslos verrotten bzw. unschwer recycelt werden können.

Die Fäden bzw. die Kettfäden und Schussfäden sind jeweils aus einem Garn auf Basis eines natürlichen oder synthetischen Rohstoffes hergestellt, wie bereits erläutert wurde. Bei diesem Garn handelt es sich wie üblich um ein praktisch endloses fadenförmiges Gebilde, welches durch das Spinnen von Einzelfasern bestimmter Länge (Stapelfasern) oder auch durch Verdrehen von Endlosfasern (Filamente) hergestellt werden kann. In jedem Fall stellt der als Gewebe ausgebildete Träger nach wie vor die erforderliche mechanische Festigkeit für das Klebeband zur Verfügung und behält diese auch nach der Bandage von Kabelbündeln unverändert bei. Außerdem gewährleistet der Träger aus dem Gewebe eine praktisch homogene und geschlossene Oberfläche, die unschwer ein- und/oder beidseitig mit der Kleberbeschichtung ausgerüstet werden kann. Dadurch lassen sich die Herstellungskosten insgesamt niedrig halten. Das gilt auch uns insbesondere unter Berücksichtigung der Tatsache, dass die Fäden aus dem natürlichen Rohstoff ganz besonders bevorzugt aus Baumwolle hergestellt werden können. Tatsächlich steht Baumwolle praktisch unbegrenzt und zu einem niedrigen Preis zur Verfügung, so dass sich das erfindungsgemäße Klebeband besonders kostengünstig produzieren lässt.

Hierzu trägt ergänzend bei, dass für die Kettfäden und die Schussfäden auf jeweils materialeinheitliche bzw. sortenreine Garne zurückgegriffen wird und sich folglich das Gewebe problemlos herstellen lässt. Tatsächlich kommen überwiegend keine Mischgarne für einerseits die Kettfäden und andererseits die Schussfäden zum Einsatz, um die Herstellungskosten niedrig zu halten. Selbstverständlich schließt die Erfindung grundsätzlich solche Mischgarne zur Realisierung des jeweiligen Kettfadens und/oder Schussfadens nicht aus, wie bereits einleitend erläutert wurde.

Es hat sich bewährt, wenn die Anzahl der Kettfäden in Längsrichtung des Trägers im Bereich von 20 bis 50 Kettfäden/cm angesiedelt sind. Besonders bevorzugt sind ca. 30 bis 35, insbesondere 31 Kettfäden/cm. Für die Schussfäden in Querrichtung des Trägers empfiehlt die Erfindung ca. 20 bis 50 Schussfäden. Besonders bevorzugt ist ein Bereich von 20 bis 25 Schussfäden/cm, insbesondere 24 Schussfäden/cm.

Die Feinheit der Kettfäden mag im Bereich von 30 bis 200 dtex angesiedelt sein, beträgt bevorzugt 80 bis 100 dtex, insbesondere 85 dtex. Für die Feinheit der Schussfäden empfiehlt die Erfindung 50 bis 300 dtex, vorzugsweise 150 bis 250 dtex, insbesondere ca. 200 dtex.

Die Reißkraft des Trägers aus dem Mischgewebe beträgt in Querrichtung regelmäßig 70 bis 200 N/cm, typischerweise ca. 90 N/cm, und liegt damit auf einem relativ niedrigen Niveau. Dadurch lassen sich problemlos bandförmige längserstreckte Träger und folglich die erfindungsgemäßen Klebebänder von Hand einreißen. Typischerweise werden hier Breiten des Trägers und folglich des Klebebandes im Bereich von einigen Zentimetern beobachtet.

Damit der Träger dennoch die erforderliche Stabilität aufweist, schlägt die Erfindung eine Reißdehnung in Längsrichtung vor, die im Bereich von ca. 10 % bis 40 % liegt. Das heißt, der bandförmige Träger aus dem Mischgewebe ist bei der Verarbeitung unverändert formstabil und zwar insbesondere in seiner Haupterstreckungsrichtung, der Längsrichtung bzw. in Richtung der Kettfäden.

Dadurch, dass das Flächengewicht des Trägers im Bereich von 50 bis 200 g/m² angesiedelt ist, vorzugsweise 80 bis 100 g/m² beträgt, wird die manuelle Verarbeitung vereinfacht und können große Längen des Klebebandes auf Klebebandrollen bevorratet werden. Hierzu trägt auch bei, dass die Dicke des Trägers und folglich des Klebebandes insgesamt im Bereich von 0,1 mm bis 0,3 mm angesiedelt ist und typischerweise 0,15 mm beträgt.

Der Klebstoff wird im Allgemeinen mit einem Auftragsgewicht zwischen 30 g/m² und 150 g/m² aufgetragen, insbesondere liegt das Auftragsgewicht im Bereich zwischen ca. 40 g/m² und 80 g/m². Infolge dieser geringen Auftragsgewichte ändern sich die Eigenschaften des Trägers durch den Kleberauftrag praktisch nicht, so dass die zuvor angegebenen Werte gleichsam auch für das Klebeband im Ganzen gelten. Dabei empfiehlt die Erfindung den Rückgriff auf Synthesekautschuk oder Acrylat als Klebstoff. Der Klebstoff lässt sich auch nachträglich vernetzen, um eine besondere Temperaturbeständigkeit zu erreichen.

Dies ist besonders vor dem Hintergrund erforderlich, als das erfindungsgemäße Klebeband in der Regel zum Bandagieren von Kabelbündeln in Automobilen eingesetzt wird. Da an dieser Stelle typischerweise Temperaturen von bis zu 105°C für Innenraumanwendungen bzw. 150°C für Motorraumanwendungen beherrscht werden müssen, ist die Temperaturbeständigkeit des zugehörigen bandförmigen Trägers essentiell. Diese wird problemlos erreicht, so lange der natürliche Rohstoff für den Träger in den angegebenen Gewichtsgrenzen zum Einsatz kommt. Außerdem hat sich in diesem Zusammenhang bewährt, wenn die Kleberbeschichtung mit einem Auftragsgewicht von 60 g/m² aufgebracht und mit einem Synthesekautschuk-Klebstoff gearbeitet wird.

Als Materialien für die Herstellung der Kettfäden empfiehlt die Erfindung die bereits angesprochenen Polyestergarne bzw. Polyesterfilamentgarne. Diese Garne und folglich die Kettfäden zeichnen sich durch eine besondere Stabilität und Beständigkeit im Hinblick auf die Anforderungen im Automobilbereich aus, insbesondere die Temperatur-, Öl-, Benzin-, Dieselbeständigkeit etc.. Das Gleiche gilt im Wesentlichen für die Schussfäden, die bevorzugt aus den natürlichen Garnen hergestellt sind, beispielsweise als Fäden auf Basis von Viskosefasern oder Modalfasern und insbesondere aus Baumwollgarn. Daneben kann auch Bambusgarn für die Herstellung der Schussfäden eingesetzt werden oder allgemein als Ausgähgsmaterial für das eingesetzte Garn dienen. Dabei handelt es sich insgesamt bei den fraglichen Fäden um solche, die aus dem Grundmaterial Zellulose bestehen und damit einem nachwachsenden Rohstoff. Für die Herstellung der Fäden kommen also natürlich Kunstfasern im Allgemein bzw. überwiegend zum Einsatz. Grundsätzlich kann an dieser Stelle aber auch auf andere nachwachsende Rohstoffe und daraus resultierende Fasern respektive Garne im Rahmen der Erfindung zurückgegriffen werden.

Die Viskosefasern stellen natürliche Kunstfasern dar, was mithin auch für die daraus hergestellten Schussfäden nach vorteilhafter Ausgestaltung gilt. Dies ist im Gegensatz zu den Kettfäden und den die Basis hierfür bildenden synthetischen Kunstfasern, die vorzugsweise aus Polyester hergestellt sind. Grundsätzlich können an dieser Stelle auch Garne respektive Fasern aus Polyacryl im Rahmen der Erfindung zum Einsatz kommen.

Neben den beschriebenen Viskosefasern als Basis für die Schussfäden empfiehlt die Erfindung grundsätzlich auch den Einsatz so genannter Modalfasern für die Schussfäden, die gegenüber Viskosefasern durch einen etwas unterschiedlichen Herstellungsprpzess ausgezeichnet sind. Daraus resultieren höhere Faserfestigkeiten und zum Teil verbesserte Fasereigenschaften, sind die Modalfasem gleichwohl aber - wie die Viskosefasern - zu 100% aus Zellulose hergestellt. In jedem Fall findet als Rohmaterial für die Herstellung der Fäden aus den natürlichen Garnen im Allgemeinen Zellstoff Verwendung, welcher aus Holz durch die Entfernung der Bindestoffe direkt und ohne chemische Umwandlung oder auch aus Baumwolle gewonnen wird.

Da der erfindungsgemäße Träger durch die beschriebene Kombination aus synthetischen und natürlichen Fäden hergestellt ist, wobei typischerweise die Fäden auf Basis der natürlichen Garne mehr als 50 Gew.-% des Trägergewichtes ausmachen, auf jeden Fall im Bereich zwischen 20 und 80 Gew.-% liegen, werden die endlichen natürlichen Ressourcen geschont. Meistens kommt sogar ein Gewichtsanteil der Fäden auf Basis der natürlichen Gase bezogen auf den Träger von ca. 65 Gew.-% zum Einsatz, so dass der beschriebene Effekt sich besondere vorteilhaft darstellt.

Aufgrund der besonders umweltschonenden Herstellung des erfindungsgemäßen Klebebandes trägt dieses viel weniger zur Erhöhung des CO₂-Gehaltes in der Atmosphäre bei, als dies bei echten Synthetikfasern der Fall ist. Denn diese werden aus Rohmaterialien auf Basis von Erdöl oder Erdgas hergestellt. Hinzukommt, dass die Fäden auf Basis der natürlichen Garne problemlos und rückstandsfrei verrotten und somit die Entsorgung sowie die Wiederaufbereitung einfach gelingen. Hierin sind die wesentlichen Vorteile zu sehen.

### Beispiel:

Es wird ein Klebeband hergestellt, bei welchem der Träger mit 31 Kettfäden/cm und 24 Schussfäden/cm ausgerüstet ist. Als Kettfäden kommen Polyesterfäden mit einer Feinheit von 85 d/tex zum Einsatz. Bei den Schussfäden handelt es sich um solche aus Viskosegarn. Die Feinheit beträgt ebenfalls 85 dtex.

Als Folge hiervon besteht der Träger aus 65 Gew.-% Viskose respektive Fäden aus natürlichem Garn und 35 Gew.-% Polyester bzw. Fäden auf Basis eines synthetischen Garns. Das Flächengewicht liegt im Bereich von 80 g/m². Die Luftdurchlässigkeit beträgt zwischen 1300 und 1400 I/m²sek. Die Dicke ist bei 0,14 mm angesiedelt.

Die Reißkraft beträgt 100 N/cm. Die Reißdehnung liegt im Bereich von 22%. Die Breite des Klebebandes bewegt sich nicht einschränkend im Bereich von 19 mm.

## Patentansprüche

1. Verwendung eines Klebebandes, mit einem bandförmigen Träger aus einem Mischgewebe mit materialverschiedenen sowie sortenreinen Kettfäden aus reißfestern synthetischen Garn auf Basis rein künstlicher Rohstoffe und Schussfäden aus natürlichem Garn auf Basis natürlicher Rohstoffe, und mit einer ein- und/oder beidseitig auf den Träger aufgebrachten Kleberbeschichtung, wobei der Träger zu 20 Gew.-% bis 80 Gew.-% aus dem natürlichen Rohstoff hergestellt ist, zum Bandagieren von Kabelbündeln in Automobilen.

2. Verwendung nach Anspruch1, **dadurch gekennzeichnet, dass** der Träger zu 30 Gew.-% bis 70 Gew.-% aus dem natürlichen Rohstoff hergestellt ist.

3. Verwendung nach Anspruch 1 oder 2, **dadurch gekennzeichnet, dass** der Träger zu 60 Gew.-% bis 70 Gew.-% aus dem natürlichen Rohstoff hergestellt ist.

4. Verwendung nach einem der Ansprüche 1 bis 3, **dadurch gekennzeichnet, dass** 20 bis 50 Kettfäden/cm in Längsrichtung des Trägers realisiert sind.

5. Verwendung nach einem der Ansprüche 1 bis 4, **dadurch gekennzeichnet, dass** 20 bis 50 Schussfäden/cm in Querrichtung des Trägers vorgesehen sind.

6. Verwendung nach einem der Ansprüche 1 bis 5, **dadurch gekennzeichnet, dass** die Reißkraft des Trägers ca. 70 bis 200 N/cm beträgt.

7. Verwendung nach einem Ansprüche 1 bis 6, **dadurch gekennzeichnet, dass** die Reißdehnung des Trägers im Bereich von 10% bis 40% angesiedelt ist.

8. Verwendung nach einem der Ansprüche 1 bis 7, **dadurch gekennzeichnet, dass** das Flächengewicht des Trägers im Bereich von 50 bis 200 g/m² liegt.

9. Verwendung nach einem der Ansprüche 1 bis 8, **dadurch gekennzeichnet; dass** die Dicke des Trägers 0,1 mm bis 0,3 mm beträgt.

10. Verwendung nach einem der Ansprüche 1 bis 9, **dadurch gekennzeichnet, dass** die Kettfäden als Polyesterfäden und/oder Polyacrylfäden ausgebildet sind.

11. Verwendung nach einem der Ansprüche 1 bis 10, **dadurch gekennzeichnet, dass** die Schussfäden als Fäden auf Basis von Viskosefasern oder Modalfasem oder auf Basis von Baumwollgam bzw. Bambusgam hergestellt sind.

## Claims

1. Use of an adhesive tape, comprising a strip-shaped carrier made of a mixed fabric having different-material and single-origin warp threads made of tear-resistant synthetic yarn based on purely synthetic raw materials and weft threads made of natural yarn based on natural raw materials, and comprising an adhesive coating applied to one and/or both sides of the carrier, wherein the carrier is made from 20 wt.% to 80 wt.% of natural raw material, for bandaging cable bundles in automobiles.

2. Use according to claim 1, **characterised in that** the carrier is made from 30 wt.% to 70 wt.% of natural raw material.

3. Use according to claim 1 or 2, **characterised in that** the carrier is made from 60 wt.% to 70 wt.% of natural raw material.

4. Use according to any one of claims 1 to 3, **characterised in that** 20 to 50 warp threads/cm are achieved in the longitudinal direction of the carrier.

5. Use according to any one of claims 1 to 4, **characterised in that** 20 to 50 weft threads/cm are achieved in the transverse direction of the carrier.

6. Use according to any one of claims 1 to 5, **characterised in that** the tearing resistance of the carrier is about 70 to 200 N/cm.

7. Use according to any one of claims 1 to 6, **characterised in that** the elongation at break of the carrier is in the range of 10% to 40%.

8. Use according to any one of claims 1 to 7, **characterised in that** the weight per unit area of the carrier is in the range of 50 to 200 g/m².

9. Use according to any one of claims 1 to 8, **characterised in that** the thickness of the carrier is 0.1 mm to 0.3 mm.

10. Use according to any one of claims 1 to 9, **characterised in that** the warp threads are formed from polyester threads and/or polyacrylic threads.

11. Use according to any one of claims 1 to 10, **characterised in that** the weft threads are made as threads based on viscose fibres or modal fibres or based on cotton yarn or bamboo yarn.

## Revendications

1. Utilisation d'une bande adhésive dotée d'un support en forme de bande en textile mixte comportant des fils de chaîne en matériaux divers ou purs en fils synthétiques résistant à la rupture à base de matières premières purement synthétiques et des fils de trame en fil naturel à base de matières premières naturelles, et d'un revêtement adhésif appliqué unilatéralement et/ou bilatéralement sur le support, le support étant fabriqué à partir de matière première naturelle dans une proportion de 20 % en poids à 80 % en poids, pour le bandage de faisceaux de câbles dans les automobiles.

2. Utilisation selon la revendication 1, **caractérisée en ce que** le support est fabriqué à partir de matière première naturelle dans une proportion de 30 % en poids à 70 % en poids.

3. Utilisation selon la revendication 1 ou 2, **caractérisée en ce que** le support est fabriqué à partir de matière première naturelle dans une proportion de 60 % en poids à 70 % en poids.

4. Utilisation selon une des revendications 1 à 3, **caractérisé en ce que** 20 à 50 fils de chaîne/cm sont réalisés dans le sens longitudinal du support.

5. Utilisation selon une des revendications 1 à 4, **caractérisé en ce que** 20 à 50 fils de trame/cm sont prévus dans le sens transversal du support.

6. Utilisation selon une des revendications 1 à 5, **caractérisé en ce que** la force de rupture du support est d'environ 70 à 200 N/cm.

7. Utilisation selon une des revendications 1 à 6, **caractérisée en ce que** l'élongation à la rupture du support se situe dans la plage de 10 % à 40 %.

8. Utilisation selon une des revendications 1 à 7, **caractérisée en ce que** le grammage du support se situe dans la plage de 50 à 200 g/m².

9. Utilisation selon une des revendications 1 à 8, **caractérisée en ce que** l'épaisseur du support est de 0,1 mm à 0,3 mm.

10. Utilisation selon une des revendications 1 à 9, **caractérisée en ce que** les fils de chaîne se présentent sous forme de fils de polyester et/ou de fils de polyacrylique.

11. Utilisation selon une des revendications 1 à 10, **caractérisée en ce que** les fils de trame sont fabriqués à partir de fibres de viscose ou de fibres de modal ou de fil de coton ou de fil de bambou.
